# EUROPÄISCHE PATENTSCHRIFT

(11) **EP 3 253 661 B1**
(45) Veröffentlichungstag und Bekanntmachung des Hinweises auf die Patenterteilung: **09.03.2022**
(21) Anmeldenummer: 16701250.9
(22) Anmeldetag: 20.01.2016
(51) Int. Cl.: B65C 1/02, B65C 1/04, B65B 61/20, B65B 19/02, B65B 35/18, B65B 35/58, B65B 43/46

(54) **VORRICHTUNG UND VERFAHREN ZUM HERSTELLEN VON QUADERFÖRMIGEN PACKUNGEN FÜR ZIGARETTEN**
APPARATUS AND METHOD FOR PRODUCING RECTANGULAR PACKS FOR CIGARETTES
DISPOSITIF ET PROCÉDÉ DE FABRICATION DE PAQUETS PARALLÉLÉPIPÉDIQUES POUR CIGARETTES

(30) Priorität: 05.02.2015 DE 102015001310; 11.02.2015 DE 102015001593
(43) Veröffentlichungstag der Anmeldung: 13.12.2017
(73) Patentinhaber: Focke & Co. (GmbH & Co. KG), 27283 Verden (DE)
(72) Erfinder: SCHMIDT, Jens, 28879 Grasberg (DE); BUDDE, Patrick, 28213 Bremen (DE); RÖSE, Thomas, 58256 Ennepetal (DE); BISCHOFF, Martin, 27324 Hassel (DE)
(74) Vertreter: Ellberg, Nils
(86) Internationale Anmeldenummer: PCT/EP2016/000095
(87) Internationale Veröffentlichungsnummer: WO 2016/124313

(56) Entgegenhaltungen:
- EP-A1- 0 596 387
- EP-A1- 0 894 750
- EP-A1- 0 952 085
- DE-A1- 4 339 778
- DE-A1- 10 227 065
- DE-A1- 10 344 675
- GB-A- 2 199 297

## Beschreibung

Die Erfindung betrifft eine Vorrichtung zum Herstellen von quaderförmigen Packungen für Zigaretten, mit einem Fördermittel zum Transport der Packungen und mit wenigstens einer Einrichtung zum Anbringen von Druckträgern wie Banderolen, Coupons oder dergleichen auf wenigstens eine Seitenfläche der Packungen, wobei die Einrichtung zum Anbringen der Druckträger im Bereich des Fördermittels angeordnet ist zum Anbringen der Druckträger auf eine der Einrichtung zugewandte Seitenfläche der Packungen während des Transports derselben entlang des Fördermittels, und wobei wenigstens eine Dreheinrichtung dem Fördermittel vorgeordnet und/oder nachgeordnet ist zum Drehen der Packungen in eine zur Anbringung der Druckträger im Bereich des Fördermittels geeignete Relativstellung bzw. zum Drehen der Packungen in eine für die Weiterverarbeitung geeignete Relativstellung nach dem Anbringen der Druckträger, gemäß dem Oberbegriff des Anspruchs 1.

Weiterhin betrifft die Erfindung ein entsprechendes Verfahren gemäß dem Oberbegriff des Anspruchs 7.

Die Anbringung von Druckträgern an Packungen für Zigaretten ist eine in der Praxis regelmäßig vorkommende Aufgabe bei der Herstellung von Packungen für Zigaretten. Beispielsweise müssen oftmals Steuerbanderolen entsprechend der Vorschriften des Landes in dem die Packungen verkauft werden sollen an der Packung angebracht werden. Weiterhin ist es teilweise gewünscht andere Druckträger wie beispielsweise Coupons an der Packung anzubringen, insbesondere auch zusätzlich zur vorgeschriebenen Steuerbanderole.

Verfahren und Vorrichtungen zur Lösung dieser Aufgabe sind aus der Praxis in zahlreichen Ausgestaltungen bekannt, beispielsweise aus DE 43 39 778 A1, GB 2 199 297 A, DE 103 44 675 A1 oder EP 0 952 085 A1. Die DE 43 39 778 A1 offenbart eine Vorrichtung und ein Verfahren gemäß den Oberbegriffen der Ansprüche 1 und 7. Allerdings weisen die bekannten Lösungen den Nachteil auf, dass die Anbringung der Druckträger in der Maschine einen entsprechenden Platz für die Anordnung der benötigten Aggregate erfordert, der in der Regel stark begrenzt ist oder gar nicht zur Verfügung steht, beispielsweise wenn vorhandene Maschinen nachgerüstet werden sollen.

### BESTÄTIGUNGSKOPIE

Ein weiteres Problem besteht darin, dass auf den Vorrichtungen unterschiedliche Produkte insbesondere für unterschiedliche Märkte hergestellt werden müssen. Hiermit einher geht zumindest teilweise eine unterschiedliche Anordnung von einem oder mehreren Druckträgern entsprechend den Gegebenheiten und gesetzlichen Vorschriften am Verkaufsort.

Hiervon ausgehend liegt der Erfindung die Aufgabe zu Grunde Vorrichtungen und Verfahren der eingangs genannten Art weiterzuentwickeln, insbesondere im Hinblick auf eine möglichst platzsparende Anordnung der Aggregate zur Anbringung der Druckträger und/oder im Hinblick auf die Möglichkeit mit möglichst geringem Aufwand verschiedene Produkte herstellen zu können.

Eine Vorrichtung zur Lösung dieser Aufgabe weist die Merkmale des Anspruchs 1 auf. Es ist demnach vorgesehen, dass das Fördermittel einen aufrechten Förderabschnitt aufweist, in dessen Bereich die wenigstens eine Einrichtung zum Anbringen der Druckträger angeordnet ist.

Diese Lösung weist insbesondere den Vorteil auf, dass die Anordnung der Einrichtung zum Anbringen der Druckträger in einem aufrechten Förderabschnitt nur wenig Platz im Grundriss benötigt. Die Nachrüstung von vorhandenen Vorrichtungen ist damit in der Regel möglich. Zudem wird die Anbringung von Druckträgern durch den Förderabschnitt erleichtert, da alle wesentlichen Seitenflächen der Packungen zugänglich sind. Schließlich ist es durch die Dreheinrichtung möglich die Packungen so an das Fördermittel zu übergeben, dass die Seitenflächen, an denen die Druckträger angebracht werden sollen, sich in einer günstigen Relativstellung befinden. Mit Hilfe eine zweiten Dreheinrichtung kann die Packung dann in eine Relativstellung gebracht werden, die sich für die weitere Verarbeitung eignet. Insbesondere bei der Nachrüstung von vorhandenen Maschinen können die Packungen in die ursprüngliche Relativstellung zurückgedreht werden. Denkbar ist auch, dass nur eine Dreheinrichtung vorgesehen ist, die der Förderabschnitt vor- oder nachgeordnet ist.

Es ist vorgesehen, dass die Packungen dem Fördermittel durch eine Zuführeinrichtung zuführbar sind, wobei die Zuführeinrichtung eine im Wesentlichen horizontale Förderstrecke aufweist, entlang deren die Packungen in Richtung des Fördermittels transportierbar sind, und dass eine erste Dreheinrichtung zwischen der Zuführeinrichtung und dem Fördermittel angeordnet ist zur Übergabe der Packungen von der Zuführeinrichtung an das Fördermittel bei gleichzeitiger Drehbarkeit der Packungen in eine zur Anbringung der Druckträger geeignete Relativstellung.

Weiterhin ist vorgesehen, dass die Packungen im Anschluss an das Fördermittel an eine Abtransporteinrichtung übergebbar sind, wobei die Abtransporteinrichtung eine im Wesentlichen horizontale Förderstrecke aufweist, und dass eine weitere Dreheinrichtung zwischen der Abtransporteinrichtung und dem Fördermittel angeordnet ist zur Übergabe der Packungen von vom Fördermittel an die Abtransporteinrichtung bei gleichzeitiger Drehbarkeit der Packungen in eine für die weitere Verarbeitung geeignete Relativstellung und/oder in die ursprüngliche Relativstellung im Bereich der Zuführeinrichtung.

Eine Besonderheit kann darin bestehen, dass die Packungen mit einer Vorderseite an einem Fördertrum des Fördermittels anliegen, so dass andere Seitenflächen zum Anbringen eines Druckträgers frei liegen, insbesondere eine Stirn- bzw. Deckelseite, Schmalseiten oder eine Rückseite der Packungen.

In einer bevorzugten Ausgestaltung der Erfindung kann vorgesehen sein, dass im Bereich des Förderabschnitts des Fördermittels mehrere Einrichtungen zum Anbringen der Druckträger vorgesehen sind, die insbesondere an unterschiedlichen Seiten des Fördermittels positioniert sind, um bedarfsweise an unterschiedlichen oder mehreren Seitenflächen der Packungen Druckträger anzubringen.

Vorzugsweise ist vorgesehen, dass die Dreheinrichtungen Aufnahmen für jeweils eine Packung aufweisen, die um eine zentrale Achse gemeinsam drehbar sind, um die Packungen an das Fördermittel zu übergeben bzw. von diesem zu übernehmen, und dass die Aufnahmen jeweils um eine weitere Achse individuell drehbar sind, die jeweils quer zur gemeinsamen Achse der Aufnahmen verläuft, um die Relativstellung der Packungen anzupassen.

Gemäß einer weiteren Besonderheit, bei der es sich auch um eine eigenständige Erfindung handeln kann, ist vorgesehen, dass im Bereich der Förderstrecke Organe zum Umfalten der von einer Einrichtung an einer Seitenfläche der Packungen angebrachten Druckträger in den Bereich einer oder mehrerer anderer Seitenflächen der Packungen vorgesehen sind, wobei die Organe stromabwärts der Einrichtung angeordnet sind.

Eine vorteilhafte Weiterbildung der Erfindung sieht vor, dass bei einem zweibahnigen Aufbau der Vorrichtung mit zwei parallelen Fördermitteln, die Packungen zweibahnig zugeführt und über jeweils eine Dreheinrichtung an die parallelen Förderstrecken übergeben werden, wobei die Aufnahmen der Dreheinrichtungen gleichsinnig oder gegensinnig drehbar sind, derart, dass die Packungen mit gleicher oder unterschiedlicher Relativstellung an die beiden Fördermittel übergebbar sind.

Ein Verfahren zur Lösung der eingangs genannten Aufgabe weist die Merkmale des Anspruchs 7 auf. Es ist demnach vorgesehen, dass das Fördermittel einen aufrechten Förderabschnitt aufweist, in dessen Bereich die Druckträger mittels der Einrichtung zum Anbringen der kträger angebracht werden.

Das Verfahren weist die gleichen Vorteile wie die entsprechende Vorrichtung auf.

Es ist vorgesehen, dass die Packungen dem Fördermittel durch eine Zuführeinrichtung zugeführt werden, wobei die Zuführeinrichtung eine im Wesentlichen horizontale Förderstrecke aufweist, entlang deren die Packungen in Richtung des Fördermittels transportiert werden, und dass eine erste Dreheinrichtung zwischen der Zuführeinrichtung und dem Fördermittel angeordnet ist zur Übergabe der Packungen von der Zuführeinrichtung an das Fördermittel bei gleichzeitiger Drehbarkeit der Packungen in eine zur Anbringung der Druckträger geeignete Relativstellung.

Weiterhin ist vorgesehen, dass die Packungen im Anschluss an das Fördermittel an eine Abtransporteinrichtung übergeben werden, wobei die Abtransporteinrichtung eine im Wesentlichen horizontale Förderstrecke aufweist, und dass eine weitere Dreheinrichtung zwischen der Abtransporteinrichtung und dem Fördermittel angeordnet ist zur Übergabe der Packungen vom Fördermittel an die Abtransporteinrichtung bei gleichzeitiger Drehbarkeit der Packungen in eine für die weitere Verarbeitung geeignete Relativstellung und/oder in die ursprüngliche Relativstellung im Bereich der Zuführeinrichtung.

Eine Besonderheit kann darin bestehen, dass die Packungen mit einer Vorderseite an einem Fördertrum des Fördermittels anliegend transportiert werden, so dass andere Seitenflächen zum Anbringen eines Druckträgers frei liegen, insbesondere eine Stirn- bzw. Deckelseite, Schmalseiten oder eine Rückseite der Packungen.

Eine weitere Besonderheit, bei der es sich auch um eine eigenständige Erfindung handeln kann, kann darin bestehen, dass im Bereich des Förderabschnitts des Fördermittels wenigstens ein Organ zum Umfalten der von einer Einrichtung an einer Seitenfläche der Packungen angebrachten Druckträger in den Bereich einer oder mehrerer anderer Seitenflächen der Packungen vorgesehen ist, wobei ein Faltarm des Organs an einem umzufaltenden Abschnitt der Druckträger abrollt und diese danach gegen eine benachbarte Seitenfläche der Packungen umlegt und andrückt, während die Packungen mit kontinuierlicher Geschwindigkeit am Organ vorbeibewegt werden.

Vorzugsweise ist bei einem zweibahnigen Aufbau der Vorrichtung mit zwei parallelen Fördermitteln vorgesehen, dass die Packungen zweibahnig zugeführt und über jeweils eine Dreheinrichtung an die parallelen Förderstrecken übergeben werden, wobei die Aufnahmen der Dreheinrichtungen gleichsinnig oder gegensinnig gedreht werden können, derart, dass die Packungen mit gleicher oder unterschiedlicher Relativstellung an die beiden Fördermittel übergebbar sind.

Die Erfindung wird nachfolgend anhand von in der Zeichnung dargestellten, bevorzugten Ausführungsbeispielen erläutert. In dieser zeigen:
- Fig. 1 bis 3: drei Packungen für Zigaretten in räumlicher Darstellung mit Darstellung denkbarer Varianten der Anordnung von Druckträgern,
- Fig. 4: ein erstes Ausführungsbeispiel einer Vorrichtung zur Herstellung von Packungen für Zigaretten in schematischer räumlicher Darstellung,
- Fig. 5: eine Einzelheit der Vorrichtung in vergrößertem Maßstab gemäß Bereich V in Fig. 4,
- Fig. 6: einen Vertikalschnitt durch die Einzelheit gemäß Fig. 5 entlang Schnittlinie VI - VI in Fig. 5,
- Fig. 7: die Einzelheit gemäß Fig. 5 während einer späteren Phase im Verfahrensablauf,
- Fig. 8: ein zweites Ausführungsbeispiel einer Vorrichtung zur Herstellung von Packungen für Zigaretten in schematischer räumlicher Darstellung,
- Fig. 9: eine Einzelheit der Vorrichtung in vergrößertem Maßstab als Seitenansicht auf die Vorrichtung gemäß Fig. 8 entsprechend Pfeil IX,
- Fig. 10: eine Einzelheit der Vorrichtung in vergrößertem Maßstab als Seitenansicht auf die Vorrichtung gemäß Fig. 8 entsprechend Pfeil X,
- Fig. 11: eine Darstellung analog zu Fig. 10 während einer späteren Phase des Anbringens einer Banderole,
- Fig. 12: eine Darstellung analog zu Fig. 10 und 11 während einer späteren Phase des Anbringens einer Banderole,
- Fig. 13: ein drittes Ausführungsbeispiel einer Vorrichtung zur Herstellung von Packungen für Zigaretten in schematischer räumlicher Darstellung,
- Fig. 14: eine Einzelheit der Vorrichtung in vergrößertem Maßstab gemäß Bereich XIV in Fig. 13, und
- Fig. 15: ein viertes Ausführungsbeispiel einer Vorrichtung zur Herstellung von Packungen für Zigaretten in schematischer räumlicher Darstellung.

Die in den Ausführungsbeispielen gezeigten Vorrichtungen betreffen die Herstellung von Packungen 10 für Zigaretten. Insbesondere geht es dabei weniger um die eigentliche Herstellung der Packungen 10 aus einem Verpackungsmaterial wie Karton, sondern vielmehr um die Anbringung von Druckträgern 11 an den Packungen 10.

Bei den Druckträgern 11 handelt es sich in den gezeigten Ausführungsbeispielen um Steuerbanderolen. Es versteht sich aber, dass die Druckträger 11 auch anderen Zwecken dienen können und entsprechend ausgebildet sein können, beispielsweise als Coupon.

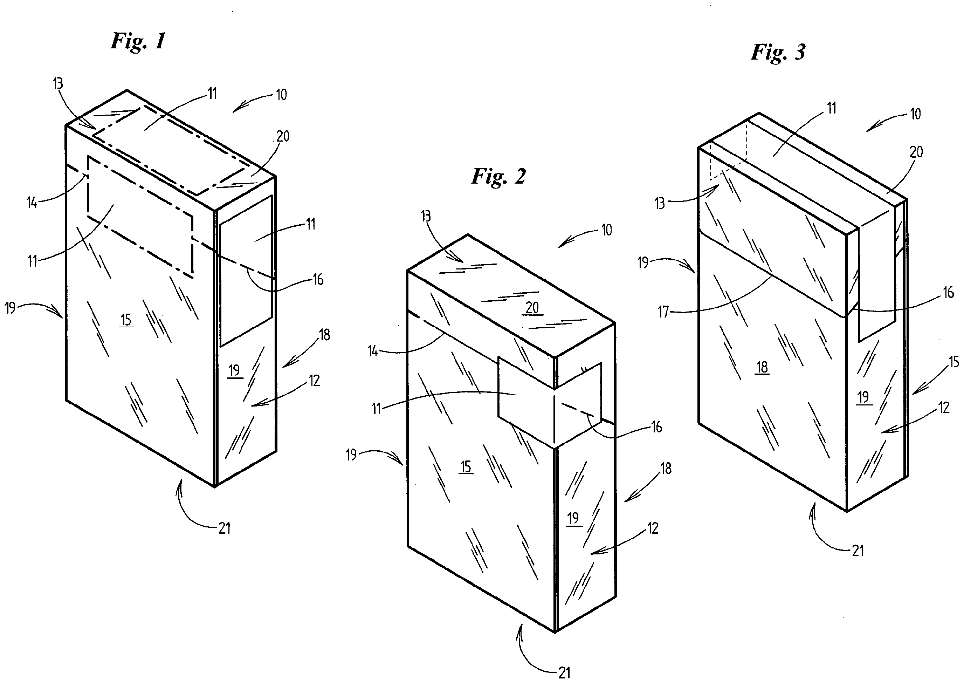

Bei den in Fig. 1 bis 3 gezeigten quaderförmigen Packungen 10 handelt es sich um Packungen 10 des Typs Hinge-Lid. Auch diese Auswahl ist rein exemplarisch zu verstehen, da auf den gezeigten Vorrichtungen auch Packungen anderer Typen hergestellt werden können.

Die Packungen 10 verfügen wie bei dieser Gattung üblich über ein (unteres) Schachtelteil 12 und einen (oberen) schwenkbar am Schachtelteil 12 gelagerten Deckel 13.

Schachtelteil 12 und Deckel 13 sind mittels eines Liniengelenks 14 schwenkbar miteinander verbunden. Das Liniengelenk 14 ist wie üblich im Bereich einer Rückseite 15 der Packung 10 angeordnet. Ausgehend vom Liniengelenk 14 stoßen Schachtelteil 12 und Deckel 13 entlang von Schließkanten 16, 17 aneinander an. Die Schließkante 17 im Bereich der Vorderseite 18 der Packung 10 ist unterhalb des Liniengelenks 14 angeordnet, so dass die Schließkanten 16 im Bereich von Schmalseiten 19 der Packung 10 schräg gerichtet verlaufen.

Die Packungen 10 verfügen neben den jeweils einander gegenüberliegenden Rückseiten 15 und Vorderseiten 18 sowie den Schmalseiten 19 noch über gegenüberliegende Oberseiten 20 und Unterseiten 21.

In Fig. 1 ist gezeigt, dass grundsätzlich ein oder mehrere Druckträger 11 an einer Packung 10 angeordnet sein können. Ferner zeigt Fig. 1 exemplarisch drei unterschiedliche Anordnungen von Druckträgern 11 an einer Packung 10, nämlich im Bereich einer Schmalseite 19, im Bereich der Rückseite 15 oder im Bereich der Oberseite 20.

Bei der Anordnung im Bereich der Schmalseite 19 oder Rückseite 15 ist der Druckträger 11 so positioniert, dass er das Liniengelenk 14 bzw. die Schließkanten 16 teilweise überdeckt.

Fig. 2 zeigt exemplarisch die Anordnung eines Druckträgers 11 im Bereich von zwei benachbarten Seitenflächen der Packung 10, nämlich im vorliegenden Fall im Bereich der Rückseite 15 und einer benachbarten Schmalseite 19. Wiederum verdeckt ein Schenkel des Druckträgers 11 die Schließkante 16 im Bereich der Schmalseite 19 der Packung 10.

Fig. 3 zeigt schließlich eine Variante, bei der sich der Druckträger 11 an drei Seitenflächen der Packung 10 erstreckt, nämlich im Bereich der Oberseite 20 sowie im Bereich der beiden benachbarten Schmalseiten 19. Die sich in den Bereich der Schmalseiten 19 erstreckenden Schenkel des Druckträgers 11 können auch in diesem Fall teilweise die Schließkante 16 überdecken. Dies kann an beiden Seitenflächen 19 so gegeben sein, oder wie in Fig. 3 gezeigt nur im Bereich einer der beiden Seitenflächen 19.

Es versteht sich, dass die in Fig. 1 bis 3 gezeigten Varianten lediglich beispielhaft mögliche Anordnungen von Druckträgern 11 an Packungen 10 darstellen sollen. Hierdurch werden andere, dem Fachmann bekannte Anordnungen jedoch nicht ausgeschlossen.

Nachfolgend werden die vier in der Zeichnung dargestellten Ausführungsbeispiele im Einzelnen beschrieben:

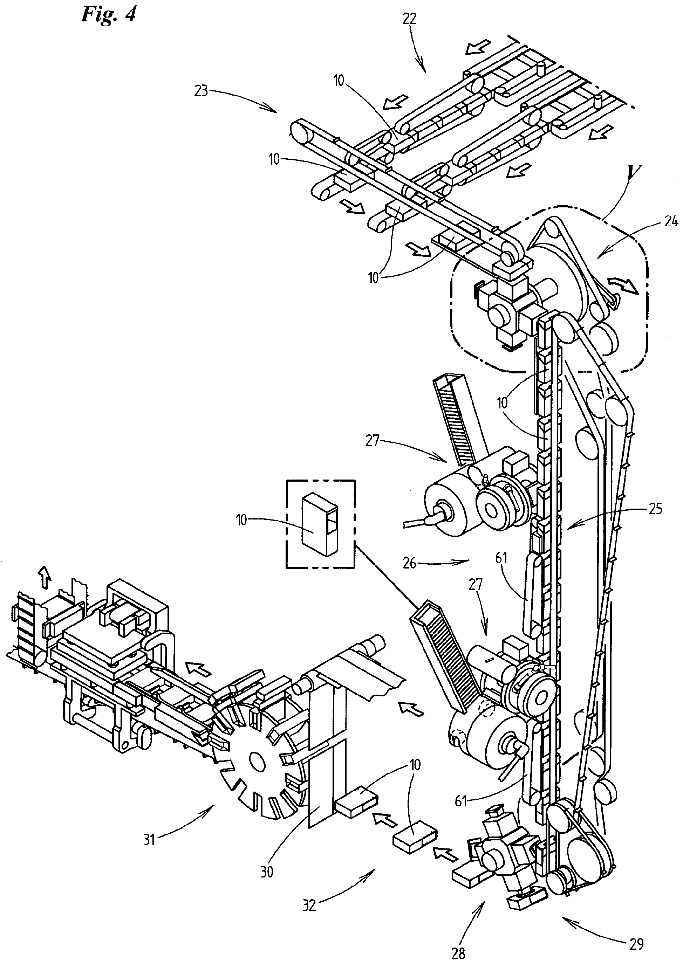

### 1. Ausführungsbeispiel (Fig. 4 bis 7)

Die Packungen 10 werden mittels einer Zuführeinrichtung 22 entlang einer im Wesentlichen horizontale Förderstrecke 23 transportiert.

Im vorliegenden Fall werden die Packungen 10 innerhalb der Zuführeinrichtung 22 zweibahnig der horizontalen Förderstrecke 23 zugeführt. Beim Zuführen der Packungen 10 in den Bereich der horizontalen Förderstrecke 23 werden die Packungen 10 auf Abstand zueinander gebracht, so dass die Packungen 10 mit Abstand zueinander entlang der Förderstrecke 23 transportiert werden können.

Im vorliegenden Ausführungsbeispiel sind die Packungen 10 im Bereich der horizontalen Förderstrecke 23 so ausgerichtet, dass diese mit ihrer Längserstreckung quer zur Transportrichtung weisen, also mit einer Schmalseite 19 quer zur Transportrichtung angeordnet sind. Ferner liegen die Packungen 10 im vorliegenden Fall auf der Rückseite 15, sind also mit nach oben weisender Vorderseite 18 positioniert.

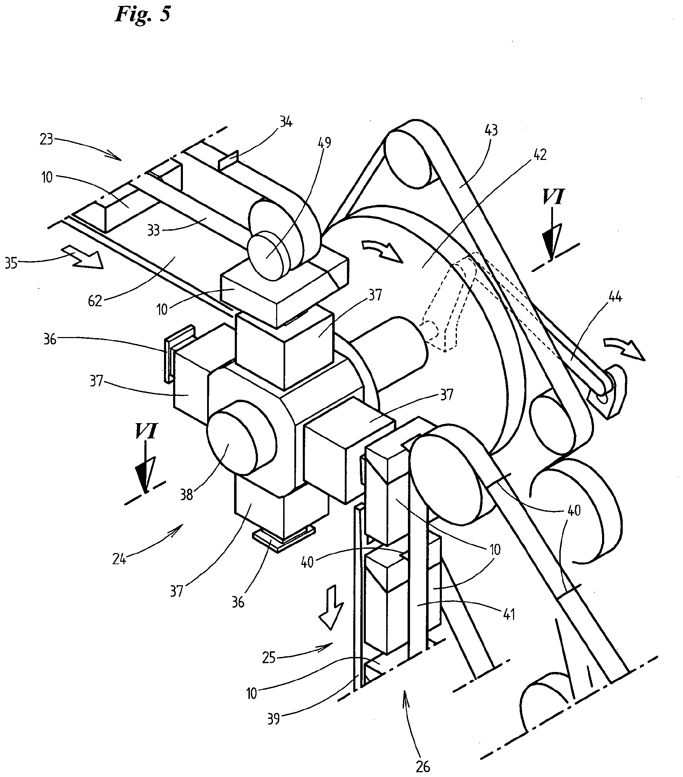

Der Transport der Packungen 10 entlang der horizontalen Förderstrecke 23 kann beispielsweise in Fig. 4 gezeigt mit einem oberhalb der Packungen 10 angeordneten Fördertrum 33 eines Endlosförderers erfolgen. Beispielsweise kann der Endlosförderer Mitnehmer 34 aufweisen, die die Packungen 10 rückseitig erfassen und entlang der Förderstrecke 23 transportieren. Dabei können die Packungen 10 beispielsweise auf einer Transportbahn 62 ruhen, wie in Fig. 5 angedeutet.

Am Ende der horizontalen Förderstrecke 23 werden die Packungen 10 an eine (erste) Dreheinrichtung 24 übergeben, welche dazu dient die Packungen 10 an ein anschließendes Fördermittel 25 zu übergeben. Die Details der Dreheinrichtung 24 sowie deren besondere Vorteile und Konstruktion werden nachfolgend im Zusammenhang mit Fig. 5 bis 7 beschrieben.

Im Bereich des sich an die Dreheinrichtung 24 anschließenden Fördermittels 25 werden die Packungen 10 mit Abstand zueinander entlang eines Förderabschnitts 26 transportiert, der sich in aufrechter Richtung erstreckt, vorzugsweise im Wesentlichen vertikal. Dabei werden die Packungen 10 mittels des Fördermittels 25 sowie mit Hilfe von nicht im Detail gezeigten Führungen entlang des Förderabschnitts 26 transportiert. Dies erfolgt vorzugsweise kontinuierlich.

Im Bereich des Förderabschnitts 26 sind ferner ein oder mehrere Einrichtungen 27 zum Anbringen von Druckträgern 11 an den Packungen 10 angeordnet. Die Einrichtungen 27 können an unterschiedlichen Seiten des Förderabschnitts 26 angeordnet sein. Es ist auch denkbar, dass mehrere Einrichtungen 27 über- bzw. nacheinander im Bereich der gleichen Seite des Förderabschnitts 26 angeordnet sind. Dies ergibt sich entsprechend der herzustellenden Packung 10. Denkbar ist ferner, dass eine Vielzahl von Einrichtungen 27 an verschiedenen Seiten des Förderabschnitts 26 angeordnet sind, die mittels einer nicht gezeigten Steuerung nach Bedarf, d. h. nach Maßgabe der herzustellenden Packung 10 wahlweise benutzt werden, um Druckträger 11 an den Packungen 10 anzubringen.

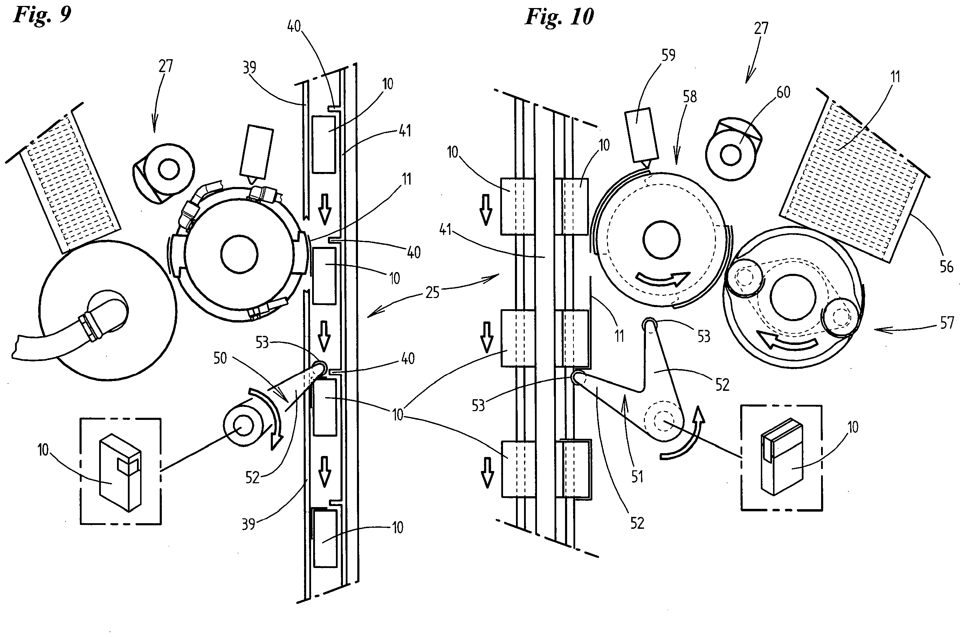

Der Aufbau und die Funktion der Einrichtungen 27 zum Anbringen von Druckträgern 11 an den Packungen 10 ergibt sich aus der EP 1 971 525 B1 der Anmelderin, auf die zum Zwecke einer vollständigen Offenbarung verwiesen wird. Wesentliche Organe der Einrichtungen 27 sind ein Magazin 56 für Druckträger 11, eine Übertragungswalze 57, eine Anlegewalze 58 und eine Leimdüse 59 für Leim insbesondere Hotmelt (Fig. 10). Ferner ist im Bereich zwischen den Walzen 57, 58 noch ein Messer 60 angeordnet. Darüber hinaus sind im Anschluss an die Einrichtungen 27 noch jeweils Andrückbänder 61 vorgesehen, in deren Bereich die Druckträger 11 gegen die Packungen 10 gedrückt werden.

Am Ende des aufrechten Förderabschnitts 26 ist eine weitere (zweite) Dreheinrichtung 28 angeordnet, die die Packungen 10 an eine anschließende horizontale Förderstrecke 29 einer Abtransporteinrichtung 32 übergibt. Die Packung 10 wird nachfolgend in Zuschnitte 30 eingehüllt, die als Außenumhüllung der Packung 10 dienen. Die Außenumhüllung aus vorzugsweise thermisch siegelbarer Folie wird im Bereich eines Siegelrevolvers 31 um die Packungen 10 gefaltet und teilweise gesiegelt. Weitere Falt- und Siegelschritte werden auf den nachfolgenden Organen der Vorrichtung durchgeführt. Zum Zwecke einer vollständigen Offenbarung wird diesbezüglich auf die Anmeldung WO 2013/091796 A1 der Anmelderin verwiesen.

Nachfolgend wird anhand von Fig. 5 bis 7 die Konstruktion und die Arbeitsweise der Dreheinrichtungen 24, 28 beschrieben. Dies erfolgt am Beispiel der ersten bzw. oberen Dreheinrichtung 24.

Die Packungen 10 ruhen mit ihrer Rückseite 15 auf einer Transportbahn 62. Transportiert werden die Packungen 10 durch ein oberhalb der Packungen 10 angeordnetes Fördertrum, welches Mitnehmer 34 aufweist, die die Packungen 10 rückseitig erfassen und in Transportrichtung gemäß Pfeil 35 bewegen.

Die Dreheinrichtung 24 verfügt über vier Aufnahmen 36 für jeweils eine Packung 10. Die Aufnahmen 36 sind jeweils an einem Arm 37 der Dreheinrichtung 24 angeordnet. Die Arme 37 sind um eine gemeinsame Achse 38 drehbar angeordnet, wobei die Achse 38 in horizontaler Ebene verläuft.

Die Aufnahmen 36 sind dazu ausgebildet die Packungen 10 während der Übergabe mittels Unterdruck zu ergreifen bzw. zu halten. Durch Drehung um die Achse 38 werden die Packungen 10 dann dem Fördermittel 25 bzw. dessen vertikalem Förderabschnitt 26 zugeführt. Darüber hinaus sind die Aufnahmen 36 drehbar um eine in Längsrichtung der Arme 37 verlaufende Achse gelagert, so dass die Packungen 10 jeweils individuell drehbar sind. Diese weiteren Drehachsen verlaufen quer zur Achse 38.

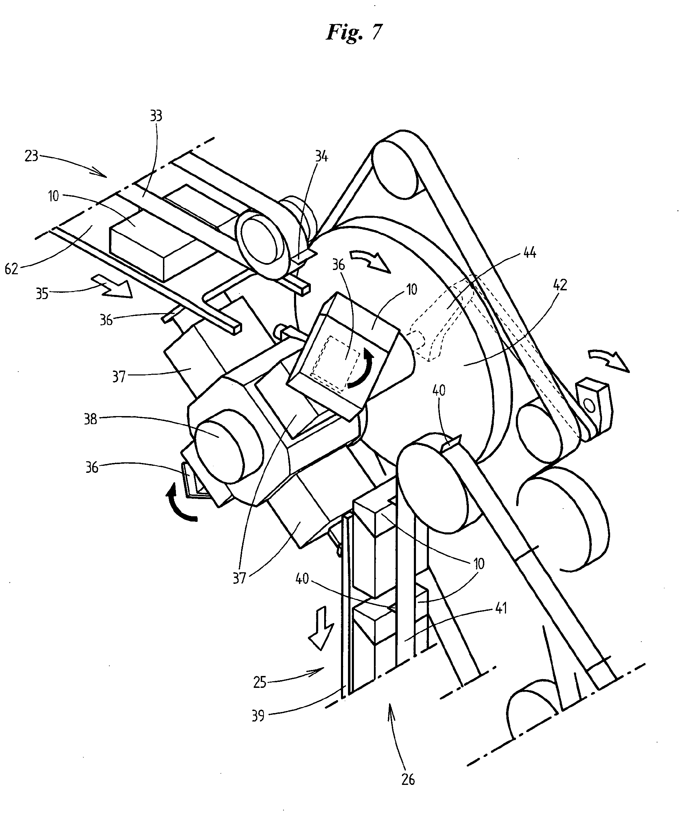

Auf diese Weise können die Packungen 10 zum einen von der Förderstrecke 23 an das Fördermittel 25 übergeben werden, die in einem Winkel von 90° zueinander verlaufen. Des Weiteren können während der Übergabe die Packungen 10 so gedreht werden, wie es für die Anbringung der Druckträger 11 Bereich des vertikalen Förderabschnitts 26 notwendig ist. Wie in Fig. 7 gezeigt, werden die Packungen 10 zunächst mit einer Schmalseite 19 in Förderrichtung weisend entlang der Förderstrecke 23 transportiert. Im Bereich des Förderabschnitts 26 sollen die Packungen 10 aber mit der Unterseite 21 in Förderrichtung weisend transportiert werden. Entsprechend werden die Packungen 10 bei der Übergabe jeweils entsprechend um 90° gedreht.

Fig. 5 und 7 zeigen ferner, wie die Packungen 10 mit Abstand zueinander entlang des vertikalen Förderabschnitts 26 transportiert werden, wobei die Packungen 10 im Bereich einer Seitenfläche (Rückseite 15) an Führungen 39 anliegen und im Bereich der gegenüberliegenden Seitenfläche (Vorderseite 18) mittels eines Mitnehmer 40 aufweisenden Fördertrums 41 in Förderrichtung transportiert werden.

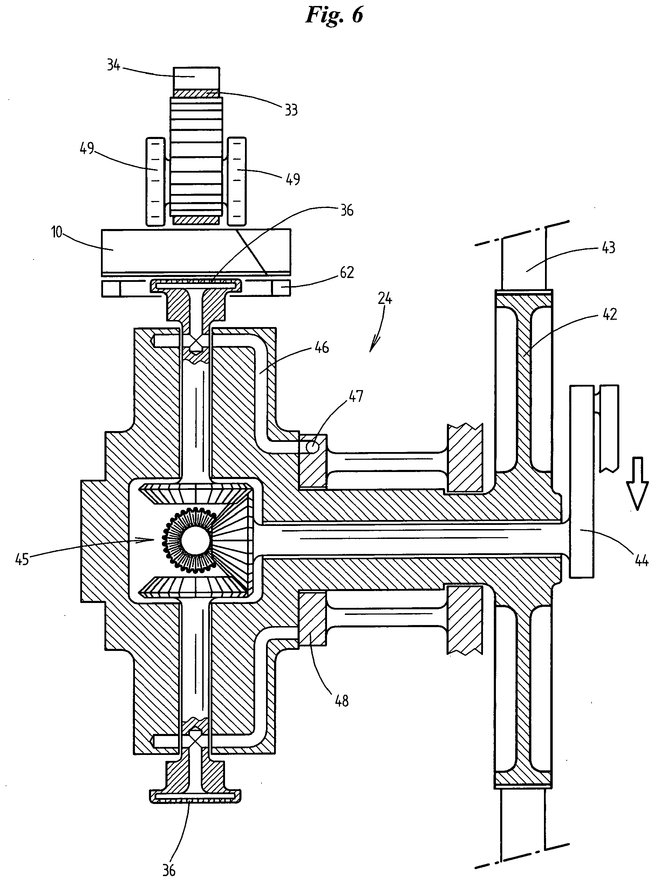

Fig. 6 zeigt Details der Konstruktion der Dreheinrichtung 24. Die Drehung der Aufnahmen 36 um die zentrale Achse 38 erfolgt mittels eines Antriebsrads 42, welches wiederum durch einen Antriebsriemen 43 angetrieben wird. Mittels eines Steuerhebels 44 werden die Aufnahmen 36 in Drehung versetzt, die über ein Kegelradgetriebe 45 mit dem Steuerhebel 44 gekoppelt sind. Ferner führen Vakuumkanäle 46 zu den Aufnahmen 36, um die Packungen 10 mit einem Unterdruck zu beaufschlagen. Die Vakuumkanäle 46 sind mit einer Vakuumquelle 47 verbunden. Die Steuerung des Vakuums erfolgt über einen feststehenden Vakuumsteuerring 48.

Ferner ist ersichtlich, dass beiderseits des Fördertrums 33 Andrückorgane 49 vorgesehen sind, um die Packungen 10 gegen die Aufnahmen 36 zu drücken.

Die soweit in wesentlichen Teilen beschriebene Vorrichtung funktioniert wie folgt: die Packungen 10 werden entlang der horizontalen Förderstrecke 23 transportiert und im Zuge der Übergabe an das Fördermittel 25 mit Hilfe der Dreheinrichtung 24 so gedreht, dass die Packungen 10 sich in einer Relativlage befinden, die eine Anbringung der Druckträger 11 mittels der Einrichtungen 27 ermöglichen. Im Anschluss an die Anbringung der Druckträger 11 werden die Packungen 10 mittels der zweiten Dreheinrichtung 28 an die Abtransporteinrichtung 32 übergeben. Dabei kann nach Bedarf eine weitere Änderung der Relativlage der Packungen 10 erfolgen, beispielsweise ein Zurückdrehen in die ursprüngliche Transportlage in der horizontalen Förderstrecke 23.

Aufgrund der Tatsache, dass die Einrichtungen 27 zum Anbringen der Druckträger 11 im Bereich eines vertikalen Förderabschnitts angeordnet sind, wird vergleichsweise weniger Platz im Grundriss des Anlagenlayouts benötigt als bei herkömmlicher Anordnung der Einrichtungen 27 im Bereich einer im Wesentlichen horizontalen Förderstrecke. Dies ermöglicht auch die Nachrüstung von vorhandenen Vorrichtungen, bei denen ansonsten kein Platz zur Verfügung stünde.

Der Vollständigkeit halber wird noch einmal darauf hingewiesen, dass die Lage der Einrichtungen 27 im Bereich der vertikalen Förderstrecke nahezu beliebig an die jeweiligen Umstände angepasst werden kann. So ist es insbesondere möglich mehrere Einrichtungen 27 aufeinanderfolgend im Bereich der gleichen Seite der Förderstrecke vorzusehen. Denkbar ist es auch, dass an bestimmten Seiten die Einrichtungen 27 komplett fehlen. Da im Grunde nur die Position der Einrichtungen 27 verändert werden muss, kann die Vorrichtung auch insbesondere einfach umgerüstet werden, um verschiedene Packungen 10 herstellen zu können. Insbesondere ist es denkbar einzelne Einrichtungen 27 abzuschalten, wenn sie bei der Erstellung bestimmter Packungen 10 nicht benötigt wird.

Weiterhin ist es denkbar, dass nur eine der beiden Dreheinrichtungen 24, 28 vorhanden ist, um die Packungen zu drehen. Die Zuführung bzw. der Abtransport der Packungen 10 muss dann gegebenenfalls angepasst werden. Denkbar ist weiterhin, dass der Förderabschnitt eine andere Erstreckung aufweist als vertikal. Dies alles gilt auch für die nachfolgenden Ausführungsbeispiele.

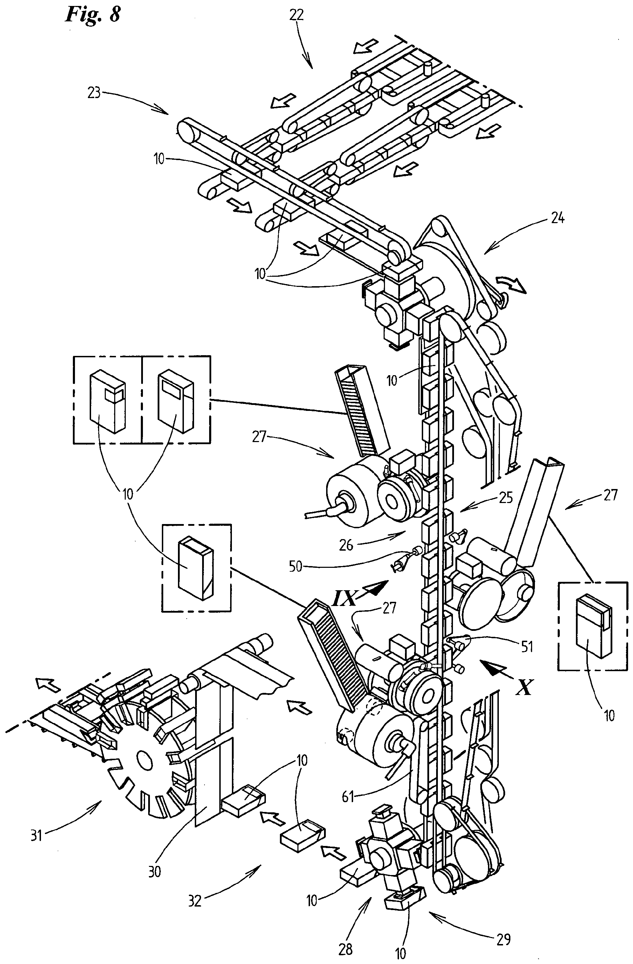

### 2. Ausführungsbeispiel (Fig. 8 bis 12)

Das 2. Ausführungsbeispiel unterscheidet sich vom 1. Ausführungsbeispiel einerseits dadurch, dass die Packungen 10 mit Hilfe der Dreheinrichtungen 24, 28 lediglich übergeben, jedoch nicht hinsichtlich ihrer Relativlage gedreht werden, d. h. die Packungen 10 werden sowohl im Bereich der horizontalen Förderstrecke 23, 29 als auch im Bereich des aufrechten Förderabschnitts 26 mit einer Schmalseite 19 in Förderrichtung weisend transportiert, ohne dass bei der Übergabe eine Drehung der Packungen 10 um die Arme 37 erfolgt.

Weiterhin unterscheidet sich das 2. Ausführungsbeispiel vom 1. Ausführungsbeispiel durch die Anzahl und Positionierung der Einrichtungen 27 zum Anbringen von Druckträgern 11 an den Packungen 10. Es sind insgesamt drei Einrichtungen 27 vorgesehen, nämlich eine erste Einrichtung 27 im Bereich der Rückseite 15 der Packungen 10 sowie zwei Einrichtungen 27 im Bereich der Oberseite 20 und Unterseite 21 der Packungen 10.

Mit Hilfe der ersten Einrichtungen 27 kann ein Druckträger 11 wie in Fig. 1 gezeigt im Bereich des Liniengelenks 14 angebracht werden. Weiterhin ist bei dieser Positionierung der Einrichtung 27 aber auch eine Anbringung des Druckträgers 11 gemäß Fig. 2 möglich. Hierauf wird nachfolgend noch eingegangen.

Die nächste Einrichtung 27 dient dazu Druckträger 11 im Bereich der Oberseite 20 anzubringen, wie in Fig. 3 gezeigt. Auch hierauf wird nachfolgend noch eingegangen.

Die dritte Einrichtung 27 ist geeignet Druckträger 11 im Bereich einer Unterseite 21 der Packungen 10 anzubringen.

In Fig. 9 ist gezeigt, wie mit der obersten Einrichtung 27 in Fig. 8 Packungen 10 gemäß Fig. 2 hergestellt werden können. Hierzu werden die Druckträger 11 derart an den Packungen 10 angebracht, dass ein Schenkel derselben über die Seitenfläche der Packung 10, an der dieser zunächst angebracht werden, hinausragt. Dieser Schenkel wird durch ein Organ 50 umgefaltet, nämlich in den Bereich der benachbarten Seitenfläche. Das Organ 50 ist stromabwärts der Einrichtung 27 angeordnet und wird entlang der Außenseite der Packung 10 geführt. Das Organ 50 ist schwenkbar gelagert, so dass es zunächst einen ersten Abschnitt des Druckträgers 11 gegen die Packung 10 drückt und dann den abstehenden Schenkel des Druckträgers 11 um die entsprechende Packungskante herum umgelegt und im Bereich der benachbarten Seitenfläche ebenfalls andrückt.

Fig. 10 bis 12 zeigen einen entsprechenden Vorgang bei der Herstellung von Packungen 10 gemäß Fig. 3. Hierbei wird zunächst mittels der Einrichtung 27 ein Druckträger 11 derart an der Oberseite 20 der Packungen 10 befestigt, dass zwei Schenkel beiderseits abstehen. Diese werden durch ein Organ 51 während des Transports in den Bereich der beiden Schmalseiten 19 umgefaltet.

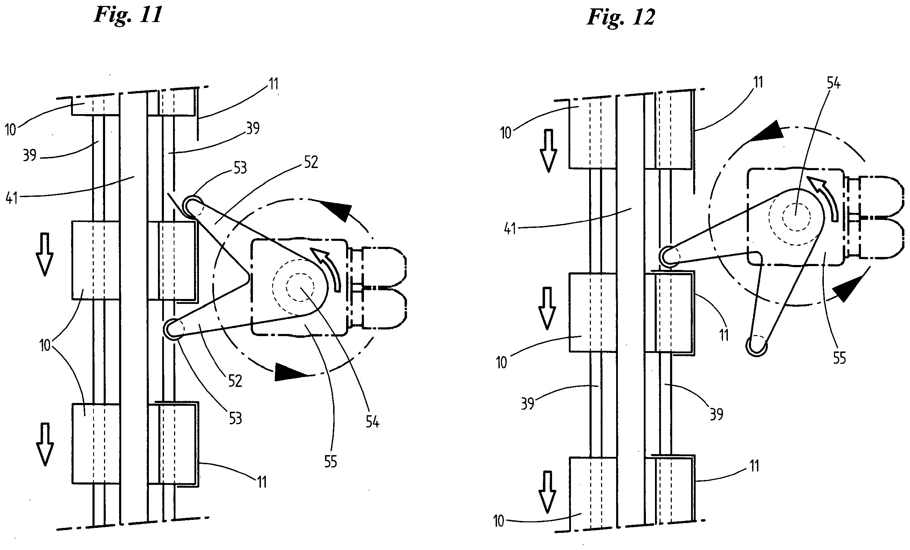

Das Organ 51 ist wie das Organ 50 stromabwärts der Einrichtung 27 angeordnet und verfügt über zwei Arme 52 an deren Enden jeweils Andrückrollen 53 frei drehbar gelagert sind. Das Organ 51 ist um eine zentrale Achse 54 drehbar gelagert, so dass mit Hilfe der beiden Arme 52 bzw. der Andrückrollen 53 zunächst ein in Transportrichtung vorne liegender Schenkel des Druckträgers 11 gegen einen Transportrichtung vorne liegenden Schmalseite 19 der Packung 10 gedrückt wird (Fig. 10) und anschließend ein in Transportrichtung hinten liegender Schenkel des Druckträgers 11 gegen eine in Transportrichtung hinten liegende Schmalseite 19 der Packung 10 gelegt wird (Fig. 12).

Der Antrieb der Organe 50, 51 kann mittels eines Servomotors 55 erfolgen.

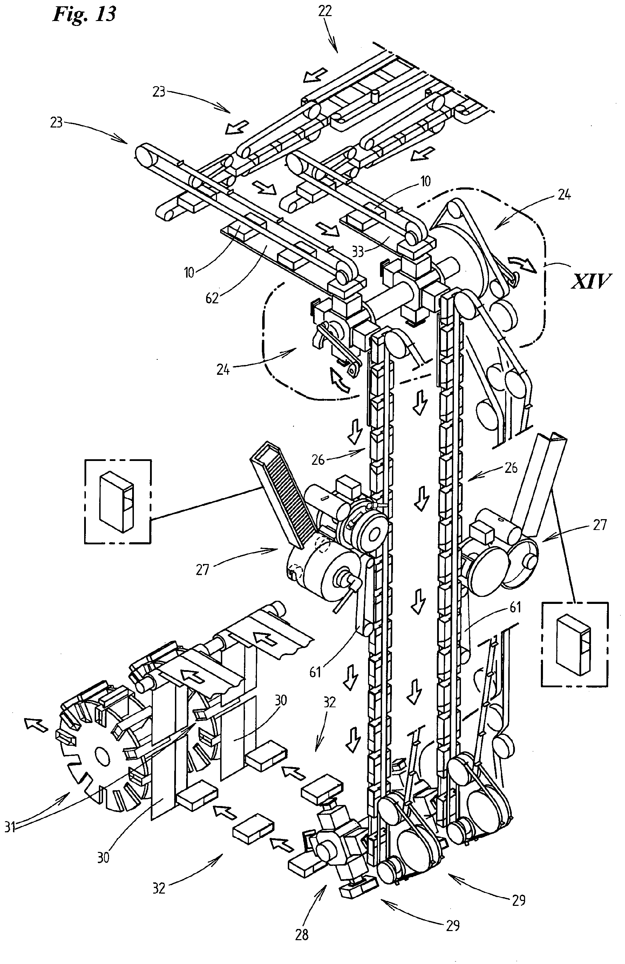

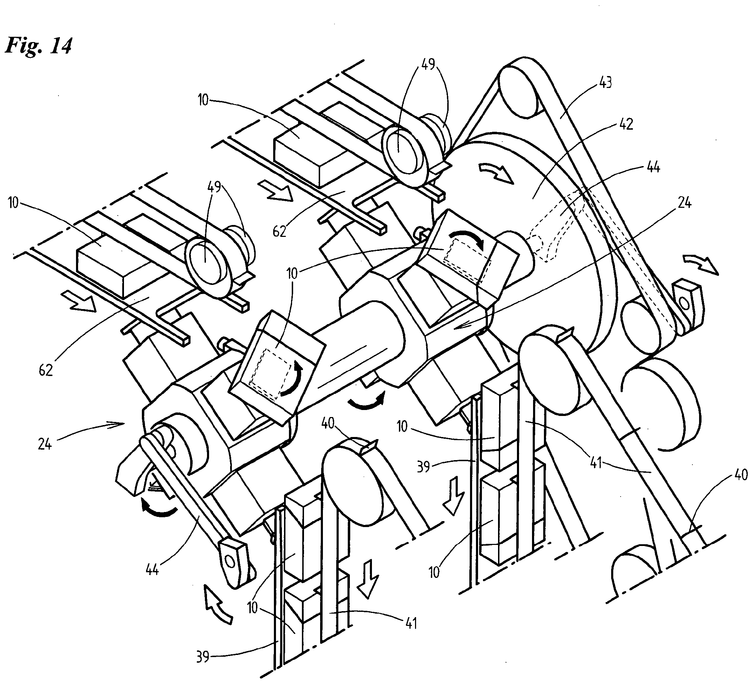

### 3. Ausführungsbeispiel (Fig. 13 und 14)

Im dritten Ausführungsbeispiel ist als weitere Variante eine komplett zweibahnig aufgebaute Vorrichtung gezeigt. Entsprechend ist nicht nur die Zuführung im Bereich der Zuführeinrichtung 22 zweibahnig konstruiert, sondern auch im Bereich der horizontalen Förderstrecke 23 werden die Packungen 10 zweibahnig transportiert und mittels einer doppelten Dreheinrichtung 24 an einen zweibahnigen Förderabschnitt 26 übergeben, in dessen Bereich je nach herzustellender Packung 10 Einrichtungen 27 zum Anbringen von Druckträgern 11 an den Packungen 10 angeordnet sind. Im Anschluss an den zweibahnigen Förderabschnitt 26 ist wieder eine doppelte Dreheinrichtung 28 vorgesehen. Auch die weitere Verarbeitung im Anschluss an die folgende horizontale Förderstrecke 29, die ebenfalls zweibahnig ausgebildet ist, erfolgt doppelbahnig.

Eine weitere Besonderheit ist aus Fig. 14 ersichtlich. Demnach werden die Packungen 10 in den beiden benachbarten Dreheinrichtungen 24 gegensinnig gedreht, so dass die Packungen 10 in den beiden anschließenden aufrechten Förderabschnitten 26 eine unterschiedliche Relativlage aufweisen, nämlich einerseits mit einer Unterseite 21 in Förderrichtung weisend und andererseits mit einer Oberseite 20 in Förderrichtung weisend. Auf diese Weise weisen in beiden aufrechten Förderabschnitten 26 jeweils die gleichen Schmalseiten 19 der Packungen 10 nach außen, so dass in diesem Bereich die Druckträger 11 gleich positioniert werden können. Andernfalls wäre es erforderlich, dass eine der beiden Einrichtungen 27 zwischen den beiden vertikalen Förderabschnitten 26 angeordnet werden müsste, was in den meisten Fällen aus Platzgründen ausscheiden wird.

Weiterhin ist aus Fig. 14 ersichtlich, dass die beiden Dreheinrichtungen 24 miteinander gekoppelt sind und über ein gemeinsames Antriebsrad 42 angetrieben werden. Jede Dreheinrichtung 24 verfügt jedoch über einen eigenen Steuerhebel 44, so dass die Packungen 10 jeweils individuell gedreht werden können.

Bei der Übergabe der Packungen 10 in den Bereich der unteren horizontalen Förderstrecke 29 werden die Packungen 10 mittels der entsprechend konstruierten Dreheinrichtungen 28 wieder in die ursprüngliche Relativlage zurückgedreht, um die weitere Verarbeitung zu vereinfachen.

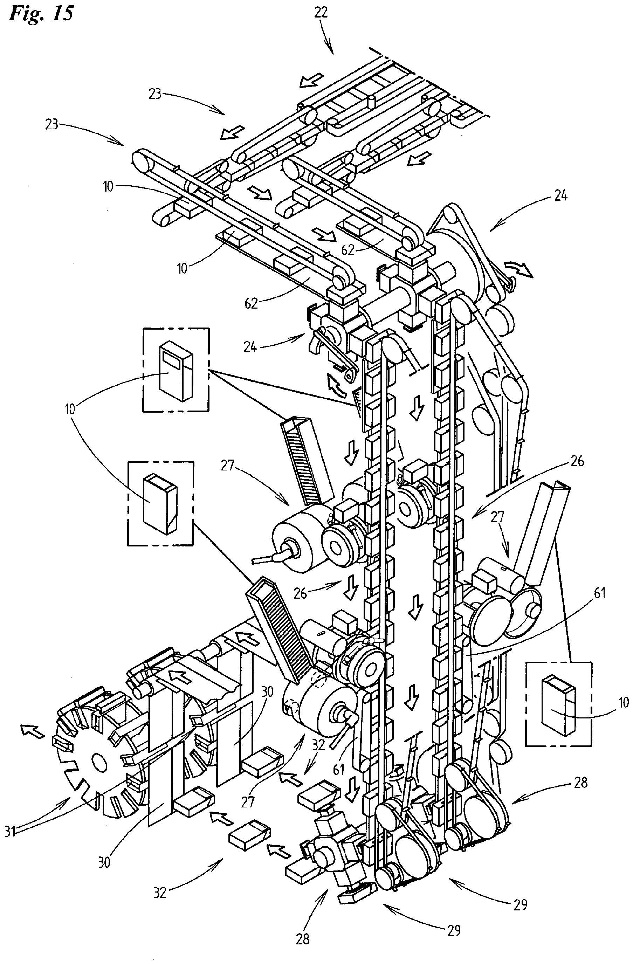

### 4. Ausführungsbeispiel (Fig. 15)

Das in Fig. 15 gezeigte vierte Ausführungsbeispiel unterscheidet sich von dem vorhergehenden dritten Ausführungsbeispiel dadurch, dass die Packungen 10 im Bereich der beiden oberen Dreheinrichtungen 24 nicht hinsichtlich ihrer Relativlage in Bezug zum Förderer gedreht werden, sondern im Bereich von beiden aufrechten Förderabschnitten 26 mit identischer Relativlage transportiert werden.

Ein weiterer Unterschied besteht darin, dass zwei weitere Einrichtungen 27 vorgesehen sind, um Druckträger 11 im Bereich der Rückseite 15 der Packungen 10 anzubringen. Diese sind stromaufwärts der beiden Einrichtungen 27 aus Fig. 13 angeordnet. Entsprechend werden in einer der beiden Förderabschnitte 26 Packungen 10 hergestellt, die im Bereich der Oberseite 20 einen Druckträger 11 aufweisen und im Bereich des anderen Förderabschnitts 26 werden Packungen 10 hergestellt, die im Bereich einer Unterseite 21 Druckträger 11 aufweisen. Gemeinsam ist den Packungen 10 aus beiden Förderabschnitten 26 jedoch, dass diese im Bereich der Rückseite 15 übereinstimmend einen auf gleiche Weise positionierten Druckträger 11 aufweisen.

In allen Ausführungsbeispielen können die Packungen 10 mittels des oder der unteren Dreheinrichtungen 28 entweder in die ursprüngliche Relativlage zurückgedreht werden oder in eine beliebige andere Relativlage, wie es für die weitere Verarbeitung benötigt wird.

**Bezugszeichenliste**

| | | | |
|---|---|---|---|
| 10 | Packung | 42 | Antriebsrad |
| 11 | Druckträger | 43 | Antriebsriemen |
| 12 | Schachtelteil | 44 | Steuerhebel |
| 13 | Deckel | 45 | Kegelradgetriebe |
| 14 | Liniengelenk | 46 | Vakuumkanal |
| 15 | Rückseite | 47 | Vakuumquelle |
| 16 | Schließkante | 48 | Vakuumsteuerring |
| 17 | Schließkante | 49 | Andrückorgan |
| 18 | Vorderseite | 50 | Organ |
| 19 | Schmalseite | 51 | Organ |
| 20 | Oberseite | 52 | Arm |
| 21 | Unterseite | 53 | Andrückrolle |
| 22 | Zuführeinrichtung | 54 | Achse |
| 23 | Förderstrecke | 55 | Servomotor |
| 24 | Dreheinrichtung | 56 | Magazin |
| 25 | Fördermittel | 57 | Übertragungswalze |
| 26 | Förderabschnitt | 58 | Anlegewalze |
| 27 | Einrichtung | 59 | Leimdüse |
| 28 | Dreheinrichtung | 60 | Messer |
| 29 | Förderstrecke | 61 | Andrückband |
| 30 | Zuschnitt | 62 | Transportbahn |
| 31 | Siegelrevolver | | |
| 32 | Abtransporteinrichtung | | |
| 33 | Fördertrum | | |
| 34 | Mitnehmer | | |
| 35 | Pfeil | | |
| 36 | Aufnahme | | |
| 37 | Arm | | |
| 38 | Achse | | |
| 39 | Führung | | |
| 40 | Mitnehmer | | |
| 41 | Fördertrum | | |

## Patentansprüche

1. Vorrichtung zum Herstellen von quaderförmigen Packungen (10) für Zigaretten, mit einem Fördermittel (25) zum Transport der Packungen (10) und mit wenigstens einer Einrichtung (27) zum Anbringen von Druckträgern (11) wie Banderolen, Coupons oder dergleichen auf wenigstens eine Seitenfläche der Packungen (10), wobei die Einrichtung (27) zum Anbringen der Druckträger (11) im Bereich des Fördermittels (25) angeordnet ist zum Anbringen der Druckträger (11) auf eine der Einrichtung (27) zugewandte Seitenfläche der Packungen (10) während des Transports derselben entlang des Fördermittels (25), und wobei wenigstens eine Dreheinrichtung (24, 28) dem Fördermittel (25) vorgeordnet und/oder nachgeordnet ist zum Drehen der Packungen (10) in eine zur Anbringung der Druckträger (11) im Bereich des Fördermittels (25) geeignete Relativstellung bzw. zum Drehen der Packungen (10) in eine für die Weiterverarbeitung geeignete Relativstellung nach dem Anbringen der Druckträger (11), **dadurch gekennzeichnet, dass** das Fördermittel (25) einen aufrechten Förderabschnitt (26) aufweist, in dessen Bereich die wenigstens eine Einrichtung (27) zum Anbringen der Druckträger (11) angeordnet ist, dass die Packungen (10) dem Fördermittel (25) durch eine Zuführeinrichtung (22) zuführbar sind, wobei die Zuführeinrichtung (22) eine im Wesentlichen horizontale Förderstrecke (23) aufweist, entlang deren die Packungen (10) in Richtung des Fördermittels (25) transportierbar sind, dass eine erste Dreheinrichtung (24) zwischen der Zuführeinrichtung (22) und dem Fördermittel (25) angeordnet ist zur Übergabe der Packungen (10) von der Zuführeinrichtung (22) an das Fördermittel (25) bei gleichzeitiger Drehbarkeit der Packungen (10) in eine zur Anbringung der Druckträger (11) geeignete Relativstellung, und dass die Packungen (10) im Anschluss an das Fördermittel (25) an eine Abtransporteinrichtung (32) übergebbar sind, wobei die Abtransporteinrichtung (32) eine im Wesentlichen horizontale Förderstrecke (29) aufweist, und dass eine weitere Dreheinrichtung (28) zwischen der Abtransporteinrichtung (32) und dem Fördermittel (25) angeordnet ist zur Übergabe der Packungen (10) vom Fördermittel (25) an die Abtransporteinrichtung (32) bei gleichzeitiger Drehbarkeit der Packungen (10) in eine für die weitere Verarbeitung geeignete Relativstellung und/oder in die ursprüngliche Relativstellung im Bereich der Zuführeinrichtung.

2. Vorrichtung nach Anspruch 1, **dadurch gekennzeichnet, dass** das Fördermittel (25) einen Fördertrum (41) aufweist und die Packungen (10) mit einer Vorderseite (18) an dem Fördertrum (41) des Fördermittels (25) anliegen, so dass andere Seitenflächen (19) zum Anbringen eines Druckträgers (11) frei liegen, insbesondere eine Stirn- bzw. Deckelseite (20, 21), Schmalseiten (19) oder eine Rückseite (15) der Packungen.

3. Vorrichtung nach Anspruch 1 oder 2, **dadurch gekennzeichnet, dass** im Bereich des Förderabschnitts (26) des Fördermittels (25) mehrere Einrichtungen (27) zum Anbringen der Druckträger (11) vorgesehen sind, die insbesondere an unterschiedlichen Seiten des Fördermittels (25) positioniert sind, um bedarfsweise an unterschiedlichen oder mehreren Seitenflächen der Packungen (10) Druckträger (11) anzubringen.

4. Vorrichtung nach Anspruch 1 oder einem der anderen vorhergehenden Z Ansprüche, **dadurch gekennzeichnet, dass** die oder jede Dreheinrichtung (24, 28) Aufnahmen (36) für jeweils eine Packung (10) aufweisen, die um eine zentrale Achse (38) gemeinsam drehbar sind, um die Packungen (10) an das Fördermittel (25) zu übergeben bzw. von diesem zu übernehmen, und dass die Aufnahmen (36) jeweils um eine weitere Achse individuell drehbar sind, die jeweils quer zur gemeinsamen Achse (38) der Aufnahmen (36) verläuft, um die Relativstellung der Packungen (10) anzupassen.

5. Vorrichtung nach Anspruch 1 oder einem der anderen vorhergehenden Z Ansprüche, **dadurch gekennzeichnet, dass** im Bereich der aufrechten Fördermittel (25) Organe (50, 51) zum Umfalten der von einer Einrichtung (27) an einer Seitenfläche der Packungen (10) angebrachten Druckträger (11) in den Bereich einer oder mehrerer anderer Seitenflächen der Packungen (10) vorgesehen sind, wobei die Organe (50, 51) stromabwärts der Einrichtung (27) angeordnet sind.

6. Vorrichtung nach Anspruch 1 oder einem der anderen vorhergehenden Z Ansprüche, **dadurch gekennzeichnet, dass** bei einem zweibahnigen Aufbau der Vorrichtung mit zwei parallelen Fördermitteln (25), die Packungen (10) zweibahnig zugeführt und über jeweils eine erste Dreheinrichtung (24) an die parallelen Fördermittel (25) übergeben werden, wobei die Aufnahmen (36) der Dreheinrichtungen (24) gleichsinnig oder gegensinnig drehbar sind, derart, dass die Packungen (10) mit gleicher oder unterschiedlicher Relativstellung an die beiden Fördermittel (25) übergebbar sind.

7. Verfahren zum Herstellen von quaderförmigen Packungen (10) für Zigaretten, wobei die Packungen (10) mittels eines Fördermittels (25) transportiert werden, und wobei auf wenigstens eine Seitenfläche der Packungen (10) Druckträger (11) wie Banderolen, Coupons oder dergleichen mittels einer entsprechenden Einrichtung (27) aufgebracht werden, und wobei die Einrichtung (27) zum Anbringen der Druckträger (11) im Bereich des Fördermittels (25) angeordnet ist zum Anbringen der Druckträger (11) auf eine der Einrichtung (27) zugewandte Seitenfläche der Packungen (10) während des Transports derselben entlang des Fördermittels (25), und wobei wenigstens eine Dreheinrichtung (24, 28) dem Fördermittel (25) vorgeordnet und/oder nachgeordnet ist, mit der die Packungen (10) in eine zur Anbringung der Druckträger (11) im Bereich des Fördermittels (25) geeignete Relativstellung drehbar sind bzw. mit der die Packungen (10) in eine für die Weiterverarbeitung geeignete Relativstellung nach dem Anbringen der Druckträger (11) drehbar sind, **dadurch gekennzeichnet, dass** das Fördermittel (25) einen aufrechten Förderabschnitt (26) aufweist, in dessen Bereich die Druckträger (11) mittels der Einrichtung (27) zum Anbringen der Druckträger (11) angebracht werden, dass die Packungen (10) dem Fördermittel (25) durch eine Zuführeinrichtung (22) zugeführt werden, wobei die Zuführeinrichtung (22) eine im Wesentlichen horizontale Förderstrecke (23) aufweist, entlang deren die Packungen (10) in Richtung des Fördermittels (25) transportiert werden, dass eine erste Dreheinrichtung (24) zwischen der Zuführeinrichtung (22) und dem Fördermittel (25) angeordnet ist zur Übergabe der Packungen (10) von der Zuführeinrichtung (22) an das Fördermittel (25) bei gleichzeitiger Drehbarkeit der Packungen (10) in eine zur Anbringung der Druckträger (11) geeignete Relativstellung, und dass die Packungen (10) im Anschluss an das Fördermittel (25) an eine Abtransporteinrichtung (32) übergeben werden, wobei die Abtransporteinrichtung (32) eine im Wesentlichen horizontale Förderstrecke (29) aufweist, und dass eine weitere Dreheinrichtung (28) zwischen der Abtransporteinrichtung (32) und dem Fördermittel (25) angeordnet ist zur Übergabe der Packungen (10) vom Fördermittel (25) an die Abtransporteinrichtung (32) bei gleichzeitiger Drehbarkeit der Packungen (10) in eine für die weitere Verarbeitung geeignete Relativstellung und/oder in die ursprüngliche Relativstellung im Bereich der Zuführeinrichtung (22).

8. Verfahren nach Anspruch 7, **dadurch gekennzeichnet, dass** die Packungen (10) mit einer Vorderseite (18) an einem Fördertrum (41) des Fördermittels (25) anliegend transportiert werden, so dass andere Seitenflächen zum Anbringen eines Druckträgers (11) frei liegen, insbesondere eine Stirn- bzw. Deckelseite (20, 21), Schmalseiten (19) oder eine Rückseite (15) der Packungen (10).

9. Verfahren nach Anspruch 7 oder 8, **dadurch gekennzeichnet, dass** im Bereich des Förderabschnitts (26) des Fördermittels (25) wenigstens ein Organ (50, 51) zum Umfalten der von einer Einrichtung (27) an einer Seitenfläche der Packungen (10) angebrachten Druckträger (11) in den Bereich einer oder mehrerer anderer Seitenflächen der Packungen (10) vorgesehen ist, wobei ein Faltarm (52) des Organs (50, 51) an einem umzufaltenden Abschnitt der Druckträger (11) abrollt und diese danach gegen eine benachbarte Seitenfläche der Packungen (10) umlegt und andrückt, während die Packungen (10) mit kontinuierlicher Geschwindigkeit am Organ (50, 51) vorbeibewegt werden.

10. Verfahren nach einem der Ansprüche 7 bis 9, **dadurch gekennzeichnet, dass** bei einem zweibahnigen Aufbau der Vorrichtung mit zwei parallelen Fördermitteln (25), die Packungen (10) zweibahnig zugeführt und über jeweils eine erste Dreheinrichtung (24) an die parallelen Fördermittel (25) übergeben werden, wobei die Aufnahmen (36) der Dreheinrichtungen (24, 28) gleichsinnig oder gegensinnig gedreht werden können, derart, dass die Packungen (10) mit gleicher oder unterschiedlicher Relativstellung an die beiden Fördermittel (25) übergebbar sind.

## Claims

1. A device for producing rectangular packs (10) for cigarettes, comprising a conveying means (25) for transporting the packs (10) and comprising at least one device (27) for applying print substrates (11) such as tax stamps, coupons or the like to at least one lateral face of the packs (10), the device (27) for applying the print substrates (11) being arranged in the area of the conveying means (25) to apply the print substrates (11) to a lateral face of the packs (10) facing the device (27) during transport thereof along the conveying means (25), and wherein at least one rotary device (24, 28) is mounted upstream and/or downstream of the conveying means (25) for rotating the packs (10) into a relative position suitable for applying the print substrates (11) in the area of the conveying means (25) or for rotating the packs (10) into a relative position suitable for further treatment once the print substrates (11) have been applied, **characterized in that** the conveying means (25) has an upright conveying section (26) in the area of which the at least one device (27) is arranged for applying the print substrates (11), **in that** the packs (10) can be fed to the conveying means (25) by a feeding device (22), wherein the feeding device (22) has a substantially horizontal delivery path (23) along which the packs (10) are transportable in the direction of the conveying means (25), **in that** a first rotary device (24) is arranged between the feeding device (22) and the conveying means (25) for handing over the packs (10) from the feeding device (22) to the conveying means (25) while at the same time the packs (10) are rotatable into a relative position suitable for applying the print substrates (11), and **in that** the packs (10) after the conveying means (25) can be handed over to a removal device (32), wherein the removal device (32) has a substantially horizontal delivery path (29), and **in that** a further rotary device (28) is arranged between the removal device (32) and the conveying means (25) for handing over the packs (10) from the conveying means (25) to the removal device (32) while at the same time the packs (10) are rotatable into a relative position suitable for the further processing and/or into the original relative position in the area of the feeding device.

2. The device according to claim 1, **characterized in that** the conveying means (25) has a conveying side (41) and that the packs (10) lie with a front side (18) against the conveying side (41) of the conveying means (25) so that other lateral faces (19) are free for the application of a print substrate (11), especially an end face or lid side (20, 21), narrow sides (19), or a back side (15) of the packs.

3. The device according to claim 1 or 2, **characterized in that** several devices (27) for applying the print substrates (11) are provided in the area of the conveying section (26) of the conveying means (25), which devices are positioned in particular on different sides of the conveying means (25) in order to apply print substrates (11) to different lateral faces or several lateral faces of the packs (10) as needed.

4. The device according to claim 1 or one of the other preceding claims, **characterized in that** the rotary device or each rotary device (24, 28) comprise seats (36) for in each case one pack (10), which are rotatable jointly about a central axis (38) in order to hand over the packs (10) to the conveying means (25) or receive them from the latter, and **in that** the seats (36) are in each case individually rotatable about another axis running in each case transversely to the common axis (38) of the seats (36), in order to adapt the relative position of the packs (10).

5. The device according to claim 1 or one of the other preceding claims, **characterized in that** members (50, 51) are provided in the area of the upright conveying means (25) for folding over the print substrates (11), that are applied by one device (27) to one lateral face of the packs (10), into the area of one or more other lateral faces of the packs (10), the members (50, 51) being situated downstream from the device (27).

6. The device according to claim 1 or one of the other preceding claims, **characterized in that**, in a two-track layout of the device with two parallel conveying means (25), the packs (10) are fed in two tracks and handed over each time by a first rotary device (24) to the parallel conveying means (25), wherein the seats (36) of the rotary devices (24) are rotatable in the same or in contrary direction, so that the packs (10) can be handed over to the two conveying means (25) with the same or different relative position.

7. A method for producing rectangular packs (10) for cigarettes, wherein the packs (10) are transported by a conveying means (25), and wherein print substrates (11) such as tax stamps, coupons or the like are applied to at least one lateral face of the packs (10) by means of a corresponding device (27), and wherein the device (27) for applying the print substrates (11) is arranged in the area of the conveying means (25) to apply the print substrates (11) to a lateral face of the packs (10) facing the device (27) during transport thereof along the conveying means (25), and wherein at least one rotary device (24, 28) is mounted upstream and/or downstream of the conveying means (25) by which the packs (10) are rotatable into a relative position suitable for applying the print substrates (11) in the area of the conveying means (25) or by which the packs (10) are rotatable into a relative position suitable for further treatment once the print substrates (11) have been applied, **characterized in that** the conveying means (25) has an upright conveying section (26) in the area of which the print substrates (11) are applied by means of a device (27) for applying the print substrates (11), **in that** the packs (10) are fed to the conveying means (25) by a feeding device (22), wherein the feeding device (22) has a substantially horizontal delivery path (23) along which the packs (10) are transported in the direction of the conveying means (25), **in that** a first rotary device (24) is arranged between the feeding device (22) and the conveying means (25) for handing over the packs (10) from the feeding device (22) to the conveying means (25) while at the same time the packs (10) are rotatable into a relative position suitable for applying the print substrates (11), and that the packs (10) after the conveying means (25) are handed over to a removal device (32), wherein the removal device (32) has a substantially horizontal delivery path (29), and **in that** a further rotary device (28) is arranged between the removal device (32) and the conveying means (25) for handing over the packs (10) from the conveying means (25) to the removal device (32) while at the same time the packs (10) are rotatable into a relative position suitable for further processing and/or into the original relative position in the area of the feeding device (22).

8. The method according to claim 7, **characterized in that** the packs (10) are transported lying by a front side (18) against a conveying side (41) of the conveying means (25) so that other lateral faces are free for the application of a print substrate (11), especially an end face or lid side (20, 21), narrow sides (19), or a back side (15) of the packs (10).

9. The method according to claim 7 or 8, **characterized in that** at least one member (50, 51) is provided in the area of the conveying section (26) of the conveying means (25) for folding over the print substrates (11), that are applied by one device (27) to one lateral face of the packs (10), into the area of one or more other lateral faces of the packs (10), wherein a folding arm (52) of the member (50, 51) rolls off along a section of the print substrate (11) to be folded over, after which it is folded and pressed against a neighboring lateral face of the packs (10), while the packs (10) are moved past the member (50, 51) with continuous speed.

10. The method according to one of the claims 7 to 9, **characterized in that**, in a two-track layout of the device with two parallel conveying means (25), the packs (10) are fed in two tracks and handed over each time by a first rotary device (24) to the parallel conveying means (25), wherein the seats (36) of the rotary devices (24, 28) can be rotated in the same or in contrary direction, so that the packs (10) can be handed over to the two conveying means (25) with the same or different relative position.

## Revendications

1. Dispositif de fabrication de paquets parallélépipédiques (10) pour cigarettes, comportant un moyen de convoyage (25) servant au transport des paquets (10) et comportant au moins un dispositif (27) servant à l'application de supports d'impression (11) tels que des vignettes fiscales, des coupons ou similaires sur au moins une surface latérale des paquets (10), le dispositif (27) servant à l'application des supports d'impression (11) étant disposé dans la région du moyen de convoyage (25) pour l'application des supports d'impression (11) sur une surface latérale des paquets (10) tournée vers le dispositif (27) pendant le transport de ceux-ci le long du moyen de convoyage (25), et au moins un dispositif de rotation (24, 28) étant placé en amont et/ou en aval du moyen de convoyage (25) pour la rotation des paquets (10) dans une position relative appropriée pour l'application des supports d'impression (11) dans la région du moyen de convoyage (25) ou pour la rotation des paquets (10) dans une position relative appropriée pour le traitement supplémentaire après l'application des supports d'impression (11), **caractérisé en ce que** le moyen de convoyage (25) comprend une partie de convoyage (26) verticale, dans la région de laquelle l'au moins un dispositif (27) servant à l'application des supports d'impression (11) est disposé, **en ce que** les paquets (10) peuvent être acheminés au moyen de convoyage (25) par le biais d'un dispositif d'acheminement (22), le dispositif d'acheminement (22) comprenant une voie de convoyage (23) sensiblement horizontale, le long de laquelle les paquets (10) peuvent être transportés en direction du moyen de convoyage (25), **en ce qu'**un premier dispositif de rotation (24) est disposé entre le dispositif d'acheminement (22) et le moyen de convoyage (25) pour le transfert des paquets (10) du dispositif d'acheminement (22) au moyen de convoyage (25) en cas de capacité de rotation simultanée des paquets (10) dans une position relative appropriée pour l'application des supports d'impression (11), et **en ce que** les paquets (10) peuvent être transférés à un dispositif d'évacuation (32) à la suite du moyen de convoyage (25), le dispositif d'évacuation (32) comprenant une voie de convoyage (29) sensiblement horizontale, et **en ce qu'**un autre dispositif de rotation (28) est disposé entre le dispositif d'évacuation (32) et le moyen de convoyage (25) pour le transfert des paquets (10) du moyen de convoyage (25) au dispositif d'évacuation (32) en cas de capacité de rotation simultanée des paquets (10) dans une position relative appropriée pour le traitement supplémentaire et/ou dans la position relative initiale dans la région du dispositif d'acheminement.

2. Dispositif selon la revendication 1, **caractérisé en ce que** le moyen de convoyage (25) comprend un brin de convoyage (41) et les paquets (10) s'appuient par un côté avant (18) contre le brin de convoyage (41) du moyen de convoyage (25), de sorte que d'autres surfaces latérales (19) soient découvertes pour l'application d'un support d'impression (11), en particulier un côté frontal ou de couvercle (20, 21), des petits côtés (19) ou un côté arrière (15) des paquets.

3. Dispositif selon la revendication 1 ou 2, **caractérisé en ce que** plusieurs dispositif (27) servant à l'application des supports d'impression (11) sont prévus dans la région de la partie de convoyage (26) du moyen de convoyage (25), lesquels dispositifs sont positionnés en particulier sur des côtés différents du moyen de convoyage (25), pour appliquer des supports d'impression (11) au besoin sur différentes ou plusieurs surfaces latérales des paquets (10).

4. Dispositif selon la revendication 1 ou l'une des autres revendications précédentes, **caractérisé en ce que** le ou chaque dispositif de rotation (24, 28) comprend des logements (36) pour respectivement un paquet (10), lesquels peuvent tourner conjointement autour d'un axe central (38), afin de transférer les paquets (10) au moyen de convoyage (25) ou de les recevoir de celui-ci, et **en ce que** les logements (36) peuvent tourner individuellement respectivement autour d'un autre axe qui s'étend respectivement transversalement à l'axe commun (38) des logements (36), afin d'adapter la position relative des paquets (10).

5. Dispositif selon la revendication 1 ou l'une des autres revendications précédentes, **caractérisé en ce que** des organes (50, 51) servant au repliage des supports d'impression (11) appliqués sur une surface latérale des paquets (10) par un dispositif (27) dans la région d'une ou plusieurs autres surfaces latérales des paquets (10) sont prévus dans la région du moyen de convoyage (25) vertical, les organes (50, 51) étant disposés en aval du dispositif (27).

6. Dispositif selon la revendication 1 ou l'une des autres revendications précédentes, **caractérisé en ce que** dans le cas d'une construction à deux voies du dispositif avec deux moyens de convoyage (25) parallèles, les paquets (10) sont acheminés sur deux voies et sont transférés aux moyens de convoyage (25) parallèles par le biais d'un premier dispositif de rotation (24) respectivement, les logements (36) des dispositifs de rotation (24) pouvant tourner dans le même sens ou en sens opposés, de telle sorte que les paquets (10) puissent être transférés aux deux moyens de convoyage (25) avec la même position relative ou une position relative différente.

7. Procédé de fabrication de paquets parallélépipédiques (10) pour cigarettes, les paquets (10) étant transportés au moyen d'un moyen de convoyage (25), et des supports d'impression (11) tels que des vignettes fiscales, des coupons ou similaires étant appliqués au moyen d'un dispositif (27) correspondant sur au moins une surface latérale des paquets (10), et le dispositif (27) servant à l'application des supports d'impression (11) étant disposé dans la région du moyen de convoyage (25) pour l'application des supports d'impression (11) sur une surface latérale des paquets (10) tournée vers le dispositif (27) pendant le transport de ceux-ci le long du moyen de convoyage (25), et au moins un dispositif de rotation (24, 28) étant placé en amont et/ou en aval du moyen de convoyage (25), dispositif de rotation à l'aide duquel les paquets (10) peuvent tourner dans une position relative appropriée pour l'application des supports d'impression (11) dans la région du moyen de convoyage (25) ou à l'aide duquel les paquets (10) peuvent tourner dans une position relative appropriée pour le traitement supplémentaire après l'application des supports d'impression (11), **caractérisé en ce que** le moyen de convoyage (25) comprend une partie de convoyage (26) verticale, dans la région de laquelle les supports d'impression (11) sont appliqués au moyen du dispositif (27) servant à l'application des supports d'impression (11), **en ce que** les paquets (10) sont acheminés au moyen de convoyage (25) par le biais d'un dispositif d'acheminement (22), le dispositif d'acheminement (22) comprenant une voie de convoyage (23) sensiblement horizontale, le long de laquelle les paquets (10) sont transportés en direction du moyen de convoyage (25), **en ce qu'**un premier dispositif de rotation (24) est disposé entre le dispositif d'acheminement (22) et le moyen de convoyage (25) pour le transfert des paquets (10) du dispositif d'acheminement (22) au moyen de convoyage (25) en cas de capacité de rotation simultanée des paquets (10) dans une position relative appropriée pour l'application des supports d'impression (11), et **en ce que** les paquets (10) sont transférés à un dispositif d'évacuation (32) à la suite du moyen de convoyage (25), le dispositif d'évacuation (32) comprenant une voie de convoyage (29) sensiblement horizontale, et **en ce qu'**un autre dispositif de rotation (28) est disposé entre le dispositif d'évacuation (32) et le moyen de convoyage (25) pour le transfert des paquets (10) du moyen de convoyage (25) au dispositif d'évacuation (32) en cas de capacité de rotation simultanée des paquets (10) dans une position relative appropriée pour le traitement supplémentaire et/ou dans la position relative initiale dans la région du dispositif d'acheminement (22).

8. Procédé selon la revendication 7, **caractérisé en ce que** les paquets (10) sont transportés de manière à s'appuyer par un côté avant (18) contre un brin de convoyage (41) du moyen de convoyage (25), de sorte que d'autres surfaces latérales soient découvertes pour l'application d'un support d'impression (11), en particulier un côté frontal ou de couvercle (20, 21), des petits côtés (19) ou un côté arrière (15) des paquets (10) .

9. Procédé selon la revendication 7 ou 8, **caractérisé en ce qu'**au moins un organe (50, 51) servant au repliage des supports d'impression (11) appliqués sur une surface latérale des paquets (10) par un dispositif (27) dans la région d'une ou plusieurs autres surfaces latérales des paquets (10) est prévu dans la région de la partie de convoyage (26) du moyen de convoyage (25), un bras de pliage (52) de l'organe (50, 51) roulant sur une partie à plier des supports d'impression (11) et rabattant et pressant ceux-ci contre une surface latérale adjacente des paquets (10), pendant que les paquets (10) sont déplacés devant l'organe (50, 51) à une vitesse continue.

10. Procédé selon l'une des revendications 7 à 9, **caractérisé en ce que** dans le cas d'une construction à deux voies du dispositif avec deux moyens de convoyage (25) parallèles, les paquets (10) sont acheminés sur deux voies et sont transférés aux moyens de convoyage (25) parallèles par le biais d'un premier dispositif de rotation (24) respectivement, les logements (36) des dispositifs de rotation (24, 28) pouvant être tournés dans le même sens ou en sens opposés, de telle sorte que les paquets (10) puissent être transférés aux deux moyens de convoyage (25) avec la même position relative ou une position relative différente.
